(19) **Europäisches Patentamt**
**European Patent Office**
**Office européen des brevets**

(11) **EP 1 892 878 A1**

(12) **EUROPEAN PATENT APPLICATION**

(43) Date of publication:
**27.02.2008 Bulletin 2008/09**

(51) Int Cl.:
**H04L 9/08** (2006.01)     **H04L 9/32** (2006.01)

(21) Application number: **06017759.9**

(22) Date of filing: **25.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **InterVideo Inc.**
**Fremont CA 94538 (US)**

(72) Inventor: **Wu, Chung-ping**
**Fremont, CA 94538 (US)**

(74) Representative: **Casalonga, Axel et al**
**Bureau Casalonga & Josse**
**Bayerstrasse 71/73**
**80335 München (DE)**

(54) **Content protection system**

(57)     A content protection system for securely delivering audio/video data from a content server to a content client through an unsecured channel is disclosed. For each session, the content protection system comprises two phases. The first phase is client-server mutual authentication and session key establishment. In this phase, the content server and the content client verify each other's legitimacy, and at the same time exchange information so that both server and client can calculate or derive the same session key. In the second phase, audio/video data is encrypted with the session key in the content server, and then decrypted with the session key in the content client. If a version of server or client is found to be compromised, its ID will be put into a blacklist.

Figure 1A

**Description**

The present invention relates to content protection systems. More specifically, the present invention discloses a digital content protection system that allows audio and video data to be securely delivered from a content server to a content client.

As the internet continues increasing in robustness, a growing number of content providers are supplying multimedia to users. Users are able to view the multimedia in streaming format rather than downloading an entire file. However, this method of content delivery has several disadvantages or challenges.

For one, the internet connection must be of suitable bandwidth to accommodate the data transfer. Insufficient bandwidth usually results in jerky video playback.

Additionally, if a channel is unsecured, a hacker could intercept all communication between the content server and the content client. A re-play attack is where the hacker records all communicated data in one session, and then the hacker impersonates the content server and feeds the recorded data to a content client in another session.

If a hacker successfully records the media content and is able to impersonate a content server, the content provider will lose potential revenue that would be normally generated by distributing the media content to a client.

Furthermore, the media content may contain sensitive, classified information, private information, trade secrets, or content that is intended for viewing only by the intended client. Lack of implementing proper protection procedures could allow the media content to fall into inappropriate hands.

Moreover, once the media content is out of the content provider's control, the media can easily be re-distributed.

Therefore there is need for a system to protect multimedia content when multimedia data is delivered through an unsecured channel.

To achieve these and other advantages and in order to overcome the disadvantages of the conventional method in accordance with the purpose of the invention as embodied and broadly described herein, the present invention provides a content protection system for securely delivering audio/video data from a content server to a content client through an unsecured channel.

The content server and the content client can be either hardware or software modules. If the channel is unsecured, a hacker could intercept all communication between the content server and the content client. The system of the present invention not only stops the hacker from getting clear-text data, but also prevents a re-play attack.

For each session, the content protection system of the present invention is composed of two phases. The first phase is client-server mutual authentication and session key establishment. In this phase, the content server and the content client verify each other's legitimacy, and at the same time exchange information so that both server and client can calculate/derive the same session key. In the second phase, audio/video data is encrypted with the session key in the content server, and then decrypted with the session key in the content client.

The present invention employs symmetric ciphers as its components. An advantage of the content protection system is that well-known ciphers are used instead of designing a new one. For example, a 128bit AES cipher can be used because its security is well trusted and it could be implemented in software with fast-computation and in hardware with low gate-count. Alternatively, the cipher could also be other block ciphers, such as DES, Blowfish, or RC4, etc..

Additionally, if a version of server or client is found to be compromised, its ID will be put into a blacklist. Every server and client contains this blacklist, and this list is periodically updated. If a server finds a client's identification number is in the blacklist, it will terminate the session. If a client finds a server's identification number is in the blacklist, it will terminate the session.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

The accompanying drawings are included to provide a further understanding of the invention, and are incorporated in and constitute a part of this specification. The drawings illustrate embodiments of the invention and, together with the description, serve to explain the principles of the invention. In the drawings:

Figure 1A is a diagram illustrating client and server communication flow according to an embodiment of the present invention;

Figure 1B is a flowchart illustrating an authentication process according to an embodiment of the present invention;

Figure 1C is a flowchart illustrating a session key establishment process according to an embodiment of the present invention;

Figures 2A-2C are flowcharts illustrating digital content encryption/decryption processes according to embodiments of the present invention; and

Figure 3 is a flowchart illustrating a revocation process according to an embodiment of the present invention.

Reference will now be made in detail to the preferred embodiments of the present invention, examples of which are illustrated in the accompanying drawings. Wherever possible, the same reference numbers are used in the drawings and the description to refer to the same or like parts.

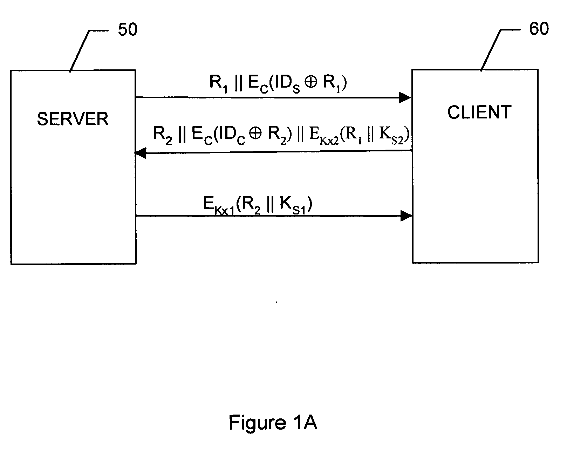

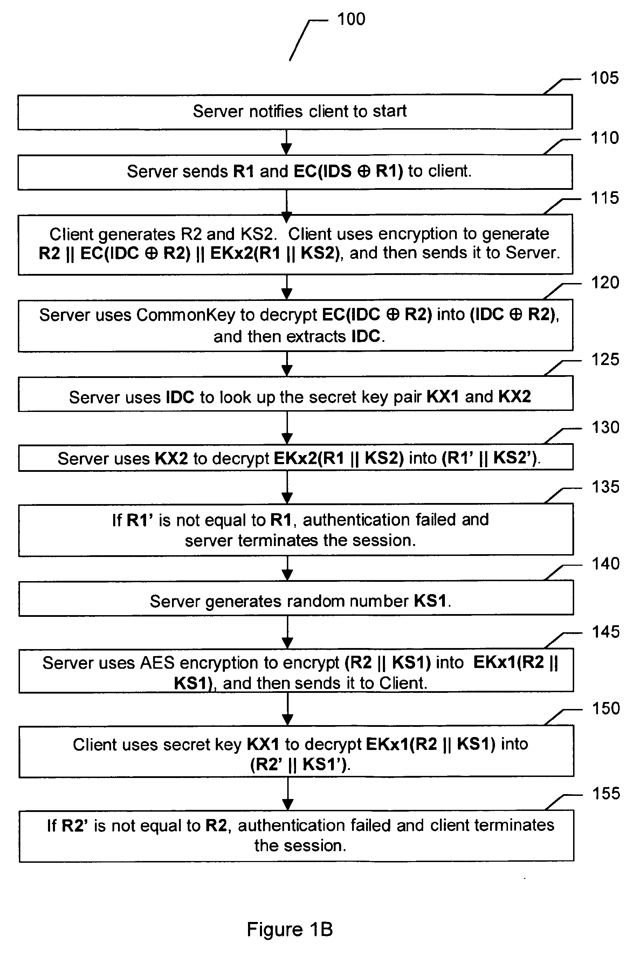

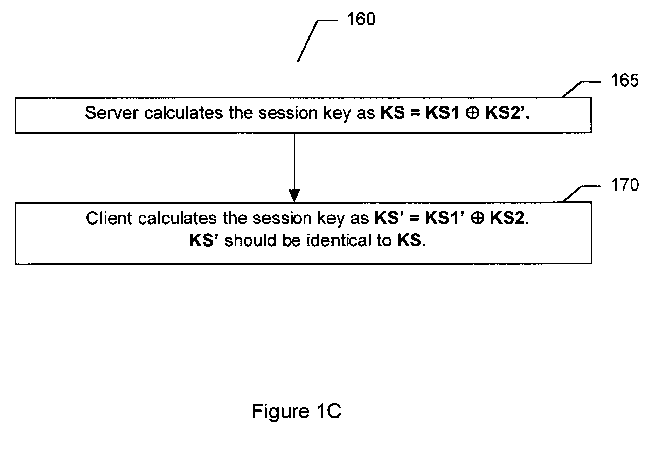

Refer to Figure 1A, which is a diagram illustrating client and server communication flow according to an embodiment of the present invention and to Figure 1B, which is a flowchart illustrating an authentication process according to an embodiment of the present invention.

The first phase of the content protection system of the present invention comprises client-server mutual authentication and session key establishment. The challenge/response process as depicted allows the server 50 and the client 60 authenticate each other, and also establishes a session key. The symbols used in the process are first defined as follows:

| || | Concatenation |
|---|---|
| $\oplus$ | XOR |
| $R_1$ | A 128 bit random number generated by the server. |
| $R_2$ | A 128 bit random number generated by the client. |
| $K_{X1}, K_{X2}$ | A pair of 128-bit secret keys that the client and the server will use to secure the data exchanged during mutual authentication and session key establishment. Both server and client have this pair of keys embedded inside. |
| $ID_S$ | A 128 bit identification number of the server. Server proposes this number to client, so that client knows which server it is dealing with. Each version of server has a unique ID. All instances of the same version share the same ID. |
| $ID_C$ | A 128 bit identification number of the client. Client proposes this number to server, so that server could know which secret keys should be used. Each version of client has a unique ID. All instances of the same version share the same ID. |
| $E_{Kx1}()$ | AES encryption using the secret key $K_{X1}$. |
| $E_{Kx2}()$ | AES encryption using the secret key $K_{X2}$. |
| $E_C()$ | AES encryption using the CommonKey. CommonKey key is a fixed 128 bit number that all versions of servers and clients know. |
| $K_{S1}$ | A 128 bit random number generated by server. It is used as part of the session key. |
| $K_{S2}$ | A 128 bit random number generated by client. It is used as part of the session key. |
| $K_S$ | The session key |

As shown in Figure 1A and Figure 1B, steps of the authentication process 100 comprises:

Step 105    Server 50 notifies client 60 to start the authentication process.

Step 110    Server 50 sends random number $R_1$ and $E_C(ID_S \oplus R_1)$ to client 60.

Step 112    Client 60 uses the CommonKey to decrypt $E_C(ID_S \oplus R_1)$ into $(ID_S \oplus R_1)$, and then extracts $ID_S$.

Step 113    Client 60 uses $ID_S$ to look up the secret key pair $K_{X1}$ and $K_{X2}$

Step 115    Client 60 generates random numbers $R_2$ and $K_{S2}$. Client 60 uses AES encryption to generate the sequence $R_2 \parallel E_C(ID_C \oplus R_2) \parallel E_{Kx2}(R_1 \parallel K_{S2})$, and then sends it to Server 50.

Step 120    Server 50 uses the CommonKey to decrypt $E_C(ID_C \oplus R_2)$ into $(ID_C \oplus R_2)$, and then extracts $ID_C$.

Step 125    Server 50 uses $ID_C$ to look up the secret key pair $K_{X1}$ and $K_{X2}$

Step 130    Server 50 uses $K_{X2}$ to decrypt $E_{Kx2}(R_1 \parallel K_{S2})$ into $(R_1' \parallel K_{S2}')$.

Step 135    If $R_1'$ is not equal to $R_1$, authentication failed and server 50 terminates the session.

Step 140    Server 50 generates random number $K_{S1}$.

Step 145    Server 50 uses AES encryption to encrypt $(R_2 \parallel K_{S1})$ into $E_{Kx1}(R_2 \parallel K_{S1})$, and then sends it to Client 60.

Step 150    Client 60 uses secret key $K_{X1}$ to decrypt $E_{Kx1}(R_2 \parallel K_{S1})$ into $(R_2' \parallel K_{S1}')$.

Step 160    If $R_2'$ is not equal to $R_2$, authentication failed and client 60 terminates the session.

Refer to Figure 1C, which is a flowchart illustrating a session key establishment process 160 according to an embodiment of the present invention. After the process illustrated in Figure 1B is done and the session wasn't terminated by server or client, mutual authentication has succeeded. In order to establish the session key, the server and client perform the following steps:

Step 165    Server calculates the session key as $K_S = K_{S1} \oplus K_{S2}'$.

Step 170    Client calculates the session key as $K_S' = K_{S1}' \oplus K_{S2}$. $K_S'$ should be identical to $K_S$.

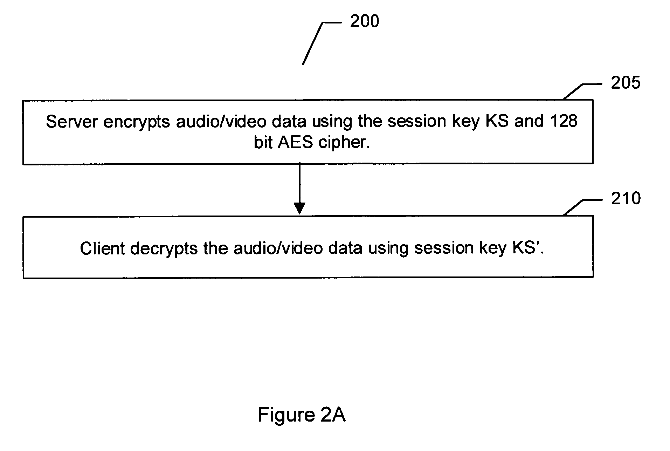

Alternatively, server can calculate the session key as $K_S = E_{KS1}(K_{S2}')$, and client can calculate the session key as $K_S' = EK_{S1}'(K_{S2})$. $K_S'$ should be identical to $K_S$.
Refer to Figure 2A, which is a flowchart illustrating a digital content encryption/decryption process 200 according to an embodiment of the present invention.
After the authentication 100 and session key establishment processes 160 illustrated in Figures 1B and 1C have successfully completed, the transmission of audio/video data can begin. The encryption/decryption process 200 comprises the following steps:

Step 205    Server encrypts audio/video data using the session key $K_S$ and 128 bit AES cipher.

Step 210    Client decrypts the audio/video data using session key $K_S'$.

For high quality video, for example HDTV, the resolution can be very high, such as 1920x1080x30fps. In this case, the uncompressed video stream could be very high in bitrate, around 120 MByte/sec. Thus, the payload encryption method described in Figure 2A would require both server and client to have very high computing power. The fasted CPUs may not be fast enough, and GPUs on graphic cards are likely not fast enough to decrypt 120 Mbytes of data each second using AES decryption.
Therefore in an embodiment of the present invention an alternative method is utilized to encrypt the video payload. For each video frame, a 128 bit number $K_{Fi}$ is generated using the following method, and $K_{Fi}$ is used as the frame key to encrypt the $i_{th}$ video frame.

$$K_{F_1} = E_{Ks}(1), \qquad for \quad i = 1$$

$$K_{F_i} = K_{F_{i-1}} \oplus E_{Ks}(K_{F_{i-1}}), \qquad for \quad i > 1$$

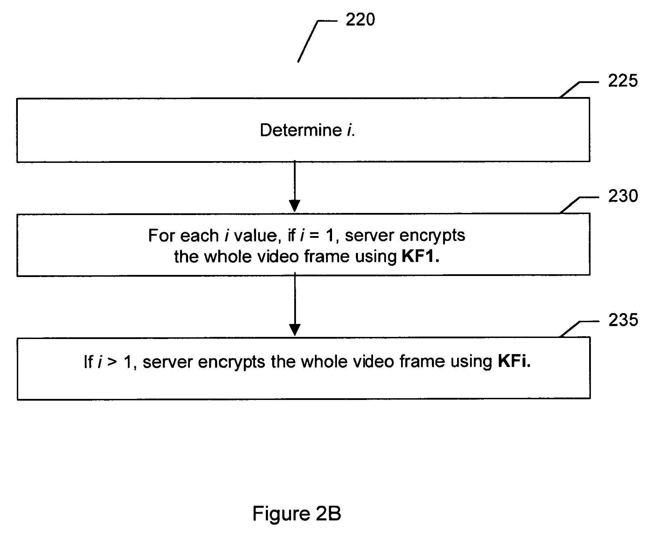

The encryption/decryption method 220 illustrated in Figure 2B comprises the following steps:

Step 225      Determine *i*.

Step 230      For each *i* value, if *i* = 1, server encrypts the whole video frame using $\mathbf{K_{F1}}$.

Step 235      If *i* > 1, server encrypts the whole video frame using $\mathbf{K_{Fi}}$.

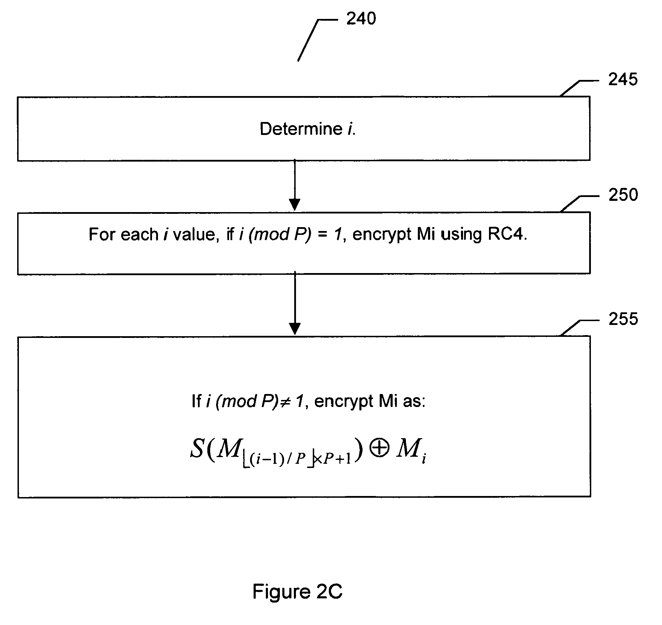

In this embodiment the method to encrypt a video frame using $K_{Fi}$ comprises using RC4 stream cipher to encrypt the whole video frame. RC4 is several times faster than AES. The benefit of this method is that RC4 is a well-established cipher that people trust.
Alternatively in cases where this method using RC4 is not fast enough, the present invention utilizes another method to encrypt a video frame.
Refer to Figure 2C, which is a flowchart illustrating a digital content encryption/decryption process 240 according to an embodiment of the present invention. In this method the video frame is divided into macro-blocks, with each macro-block containing 16x16 pixels. In this embodiment the following symbols are defined as:

$M_i$      The $i_{th}$ macro-block in the video frame.

W      The width of the video frame in terms of pixels.

H      The height of the video frame in terms of pixels.

P      A prime number which is also relatively prime to (W/16).

$S(M_i)$      Scramble $M_i$ using a very light-weight algorithm, for example 3 CPUcycle/byte.

The encryption method 240 comprises the following steps:

Step 245      Determine *i*.

Step 250      For each *i* value, if *i (mod P)* = 1, encrypt $M_i$ using RC4.

Step 255      If *i (mod P) ≠ 1,* encrypt $M_i$ as:

$$S(M_{\lfloor (i-1)/P \rfloor \times P+1}) \oplus M_i$$

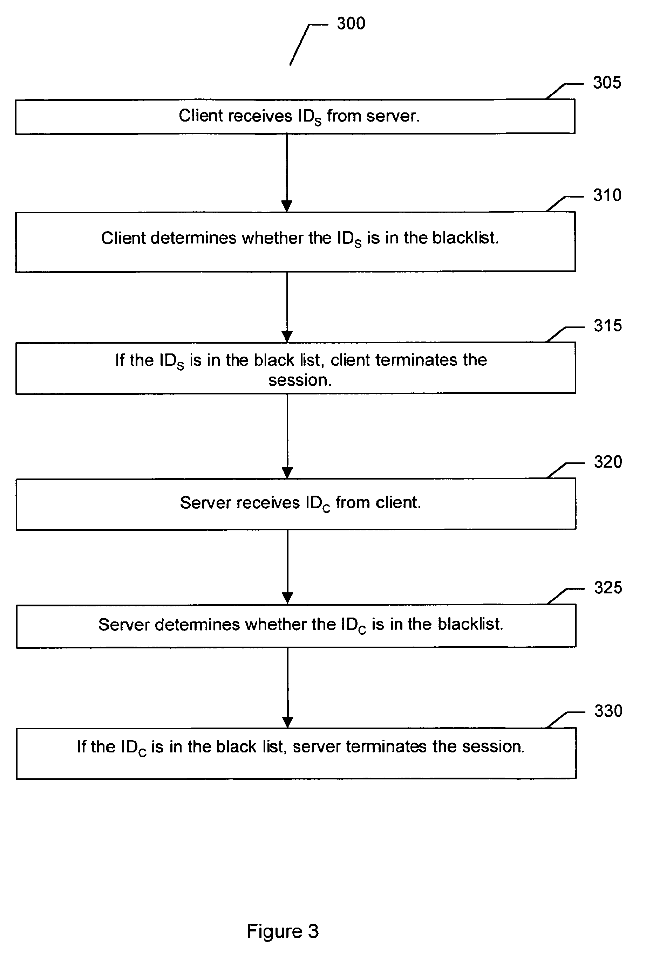

This method is approximately *P* times faster than encrypting the whole video with RC4.
Refer to Figure 3, which is a flowchart illustrating a revocation process 300 according to an embodiment of the present invention.
If a version of server or client is found to be compromised, its ID will be put into a blacklist. Every server and client contains this blacklist, and this list is updated periodically. The revocation process 300 illustrated in Figure 3 comprises the following steps:

Step 305      Client receives $ID_S$ from server.

Step 310      Client determines whether the $ID_S$ is in the blacklist.

Step 315      If the $ID_S$ is in the black list, client terminates the session.

Step 320      Server receives $ID_C$ from client.

Step 325      Server determines whether the $ID_C$ is in the blacklist.

Step 330      If the $ID_C$ is in the black list, server terminates the session.

The client checks the blacklist before it sends data to server in Step 115 of Figure 1B. The server checks the blacklist before it sends data to the client in Step 140 of Figure 1B.

The present invention employs symmetric ciphers as its components. It should be noted that the method of the present invention can utilize various ciphers. For example, a 128bit AES cipher can be used because its security is well trusted and it could be implemented in software with fast-computation and in hardware with low gate-count. Alternatively, the cipher could also be other ciphers, such as DES, Blowfish, or RC4, etc..

It will be apparent to those skilled in the art that various modifications and variations can be made to the present invention without departing from the scope or spirit of the invention. In view of the foregoing, it is intended that the present invention cover modifications and variations of this invention provided they fall within the scope of the invention and its equivalent.

**Claims**

1. A digital content protection system comprising:

    a client-server mutual authentication process comprising the steps of:

        server notifies client to start the authentication process;
        server sends random number $R_1$ and $E_C(ID_S \oplus R_1)$ to client, where $E_C$ is encryption using a common key and $ID_S$ is an identification number of the server;
        client uses the common key to decrypt $E_C(ID_S \oplus R_1)$ into $(ID_S \oplus R_1)$, and then extracts $ID_S$;
        client uses $ID_S$ to look up secret key pair $K_{X1}$ and $K_{X2}$;
        client generates random numbers $R_2$ and $K_{S2}$;
        client uses encryption to generate $R_2 \| E_C(ID_C \oplus R_2) \| E_{Kx2}(R_1 \| K_{S2})$, which the client sends to server, where $ID_c$ is an identification number of the client and $E_{Kx2}$ is encryption using secret key $K_{x2}$;
        server uses the common key to decrypt $E_C(ID_C \oplus R_2)$ into $(ID_C \oplus R_2)$, and then extracts $ID_C$;
        server uses $ID_C$ to look up secret key pair $K_{X1}$ and $K_{X2}$;
        server uses $K_{X2}$ to decrypt $E_{Kx2}(R_1 \| K_{S2})$ into $(R_1' \| K_{S2}')$;
        wherein, if $R_1'$ is not equal to $R_1$, authentication failed and server terminates;
        server generates random number $K_{S1}$;
        server uses encryption to encrypt $(R_2 \| K_{S1})$ into $E_{Kx1}(R_2 \| K_{S1})$, which the server sends to client, where $E_{Kx1}$ is encryption using secret key $K_{x1}$ ;
        client uses secret key $K_{X1}$ to decrypt $E_{Kx1}(R_2 \| K_{S1})$ into $(R_2' \| K_{S1}')$;
        wherein, if $R_2'$ is not equal to $R_2$, authentication failed and client terminates; and

    a session key establishment process comprising the steps of:

        server calculates session key as $K_S = K_{S1} \oplus K_{S2}'$; and
        client calculates session key as $K_S' = K_{S1}' \oplus K_{S2}$ ;
        wherein $K_S'$ is identical to $K_S$.

2. The digital content protection system of claim 1, further comprising:

    a data encryption and decryption process comprising the steps of:

        server encrypts audio/video data using session key $K_S$ and a cipher; and
        client decrypts the audio/video data using session key $K_S'$.

3. The digital content protection system of claim 1, where client uses AES encryption to generate $R_2 \| E_C(ID_C \oplus R_2) \| E_{Kx2}(R_1 \| K_{S2})$.

4. The digital content protection system of claim 1, where server uses AES encryption to encrypt $(R_2 \| K_{S1})$ into $E_{Kx1}(R_2 \| K_{S1})$.

5. The digital content protection system of claim 2, where the audio/video data is encrypted using the following steps:

    for each video frame, a 128 bit number $K_{Fi}$ is generated using:

$$K_{F_1} = E_{Ks}(1), \qquad for \qquad i = 1$$

$$K_{F_i} = K_{F_{i-1}} \oplus E_{Ks}(K_{F_{i-1}}), \qquad for \qquad i > 1$$

where a frame key of the $i_{th}$ frame is called $K_{Fi}$ and the $i_{th}$ frame is encrypted using $K_{Fi}$.

**6.** The digital content protection system of claim 2, where the audio/video data is encrypted using the following steps:

divide a video frame into macro-blocks;
for each $i$ value, if $i\ (mod\ P) = 1,$ encrypt $M_i$ using RC4; and
if $i\ (mod\ P) \neq 1,$ encrypt $M_i$ as:

$$S(M_{\lfloor (i-1)/P \rfloor \times P+1}) \oplus M_i$$

where $M_i$ is the $i_{th}$ macro-block in the video frame, W is a width of the video frame in terms of pixels, H is a height of the video frame in terms of pixels; P is a prime number which is also relatively prime to (W/16), and $S(M_i)$ scrambles $M_i$ using a light-weight algorithm.

**7.** The digital content protection system of claim 1, further comprising:

a revocation process using a blacklist of compromised servers and clients, the process comprising the steps of:

client receives $ID_S$ from server;
client determines whether the $ID_S$ is in the blacklist; and
if the $ID_S$ is in the black list, client terminates communication with the server;
server receives $ID_C$ from client;
server determines whether the $ID_C$ is in the blacklist;
if the $ID_C$ is in the black list, server terminates communication with the client.

**8.** A digital content protection system comprising:

a client-server mutual authentication process comprising the steps of:

server notifies client to start the authentication process;
server sends random number $R_1$ and $E_C(ID_S \oplus R_1)$ to client, where $E_C$ is encryption using a common key and $ID_S$ is an identification number of the server;
client generates random numbers $R_2$ and $K_{S2}$;
client uses encryption to generate $R_2 \| E_C(ID_C \oplus R_2) \| E_{Kx2}(R_1 \| K_{S2})$, which the client sends to server, where $ID_C$ is an identification number of the client and $E_{Kx2}$ is encryption using secret key $K_{x2}$;
server uses the common key to decrypt $E_C(ID_C \oplus R_2)$ into $(ID_C \oplus R_2)$, and then extracts $ID_C$;
server uses $ID_C$ to look up secret key pair $K_{X1}$ and $K_{X2}$;
server uses $K_{X2}$ to decrypt $E_{Kx2}(R_1 \| K_{S2})$ into $(R_1' \| K_{S2}')$;
wherein, if $R_1'$ is not equal to $R_1$, authentication failed and server terminates;
server generates random number $K_{S1}$;
server uses encryption to encrypt $(R_2 \| K_{S1})$ into $E_{Kx1}(R_2 \| K_{S1})$, which the server sends to client, where $E_{Kx1}$ is encryption using secret key $K_{X1}$;
client uses secret key $K_{X1}$ to decrypt $E_{Kx1}(R_2 \| K_{S1})$ into $(R_2' \| K_{S1}')$;
wherein, if $R_2'$ is not equal to $R_2$, authentication failed and client terminates;

a session key establishment process comprising the steps of:

server calculates session key as $K_S = K_{S1} \oplus K_{S2}'$ ; and
client calculates session key as $K_S' = K_{S1}' \oplus K_{S2}$ ;
wherein $K_S'$ is identical to $K_S$; and

a data encryption and decryption process comprising the steps of:

server encrypts audio/video data using session key $K_S$ and a cipher in electronic code book mode; and
client decrypts the audio/video data using session key $K_S'$.

**9.** The digital content protection system of claim 8, where client uses AES encryption to generate $R_2 \parallel E_C(ID_C \oplus R_2) \parallel E_{Kx2}(R_1 \parallel K_{S2})$.

**10.** The digital content protection system of claim 8, where server uses AES encryption to encrypt $(R_2 \parallel K_{S1})$ into $E_{Kx1}(R_2 \parallel K_{S1})$.

**11.** The digital content protection system of claim 8, where the audio/video data is encrypted using the following steps:

for each video frame, a 128 bit number $K_{Fi}$ is generated using:

$$K_{F_1} = E_{Ks}(1), \qquad for \quad i = 1$$

$$K_{F_i} = K_{F_{i-1}} \oplus E_{Ks}(K_{F_{i-1}}), \qquad for \quad i > 1$$

where a frame key of the $i_{th}$ frame is called $K_{Fi}$ and the $i_{th}$ frame is encrypted using $K_{Fi}$.

**12.** The digital content protection system of claim 8, where the audio/video data is encrypted using the following steps:

divide a video frame into macro-blocks;
for each $i$ value, if $i\ (mod\ P) = 1$, encrypt $M_i$ using RC4; and
if $i\ (mod\ P) \neq 1$, encrypt $M_i$ as:

$$S(M_{\lfloor (i-1)/P \rfloor \times P + 1}) \oplus M_i$$

where $M_i$ is the $i_{th}$ macro-block in the video frame, W is a width of the video frame in terms of pixels, H is a height of the video frame in terms of pixels; P is a prime number which is also relatively prime to (W/16), and $S(M_i)$ scrambles $M_i$ using a light-weight algorithm.

**13.** The digital content protection system of claim 8, further comprising:

a revocation process using a blacklist of compromised servers and clients, the process comprising the steps of:

server receives $ID_C$ from client;
server determines whether the $ID_C$ is in the blacklist;
if the $ID_C$ is in the black list, server terminates communication with the client;
client receives $ID_S$ from server;
client determines whether the $ID_S$ is in the blacklist; and
if the $ID_S$ is in the black list, client terminates communication with the server.

**14.** A digital content protection system comprising:

a client-server mutual authentication process comprising the steps of:

server notifies client to start the authentication process;
server sends random number $R_1$ and $E_C(ID_S \oplus R_1)$ to client, where $E_C$ is encryption using a common key and $ID_S$ is an identification number of the server;
client generates random numbers $R_2$ and $K_{S2}$;
client uses encryption to generate $R_2 \parallel E_C(ID_C \oplus R_2) \parallel E_{Kx2}(R_1 \parallel K_{S2})$, which the client sends to server, where $ID_C$ is an identification number of the client and $E_{Kx2}$ is encryption using secret key $K_{x2}$;
server uses the common key to decrypt $E_C(ID_C \oplus R_2)$ into $(ID_C \oplus R_2)$, and then extracts $ID_C$;
server uses $ID_C$ to look up secret key pair $K_{X1}$ and $K_{X2}$;
server uses $K_{X2}$ to decrypt $E_{Kx2}(R_1 \parallel K_{S2})$ into $(R_1' \parallel K_{S2}')$;
wherein, if $R_1'$ is not equal to $R_1$, authentication failed and server terminates;
server generates random number $K_{S1}$;
server uses encryption to encrypt $(R_2 \parallel K_{S1})$ into $E_{Kx1}(R_2 \parallel K_{S1})$, which the server sends to client, where $E_{Kx1}$ is encryption using secret key $K_{x1}$;
client uses secret key $K_{X1}$ to decrypt $E_{Kx1}(R_2 \parallel K_{S1})$ into $(R_2' \parallel K_{S1}')$;
wherein, if $R_2'$ is not equal to $R_2$, authentication failed and client terminates;

a session key establishment process comprising the steps of:

server calculates session key as $K_S = K_{S1} \oplus K_{S2}'$; and
client calculates session key as $K_S' = K_{S1}' \oplus K_{S2}$;
wherein $K_S'$ is identical to $K_S$;

a data encryption and decryption process comprising the steps of:

server encrypts audio/video data using session key $K_S$ and a cipher in electronic code book mode; and
client decrypts the audio/video data using session key $K_S'$; and

a revocation process using a blacklist of compromised servers and clients, the revocation process comprising the steps of:

server receives $ID_C$ from client;
server determines whether the $ID_C$ is in the blacklist;
if the $ID_C$ is in the black list, server terminates communication with the client;
client receives $ID_S$ from server;
client determines whether the $ID_S$ is in the blacklist; and
if the $ID_S$ is in the black list, client terminates communication with the server.

**15.** The digital content protection system of claim 14, where the audio/video data is encrypted using the following steps:

for each video frame, a 128 bit number $K_{Fi}$ is generated using:

$$K_{F_1} = E_{Ks}(1), \qquad for \qquad i = 1$$

$$K_{F_i} = K_{F_{i-1}} \oplus E_{Ks}(K_{F_{i-1}}), \qquad for \qquad i > 1$$

where a frame key of the $i_{th}$ frame is called $K_{Fi}$ and the $i_{th}$ frame is encrypted using $K_{Fi}$.

Figure 1A

/— 100

```
/— 105
┌─────────────────────────────────────────────────────────┐
│              Server notifies client to start             │
└─────────────────────────────────────────────────────────┘
                            ↓                      /— 110
┌─────────────────────────────────────────────────────────┐
│        Server sends R1 and EC(IDS ⊕ R1) to client.       │
└─────────────────────────────────────────────────────────┘
                            ↓                      /— 115
┌─────────────────────────────────────────────────────────┐
│  Client generates R2 and KS2.  Client uses encryption    │
│  to generate R2 || EC(IDC ⊕ R2) || EKx2(R1 || KS2),      │
│  and then sends it to Server.                            │
└─────────────────────────────────────────────────────────┘
                            ↓                      /— 120
┌─────────────────────────────────────────────────────────┐
│  Server uses CommonKey to decrypt EC(IDC ⊕ R2) into      │
│  (IDC ⊕ R2), and then extracts IDC.                      │
└─────────────────────────────────────────────────────────┘
                            ↓                      /— 125
┌─────────────────────────────────────────────────────────┐
│   Server uses IDC to look up the secret key pair KX1     │
│   and KX2                                                │
└─────────────────────────────────────────────────────────┘
                            ↓                      /— 130
┌─────────────────────────────────────────────────────────┐
│  Server uses KX2 to decrypt EKx2(R1 || KS2) into         │
│  (R1' || KS2').                                          │
└─────────────────────────────────────────────────────────┘
                            ↓                      /— 135
┌─────────────────────────────────────────────────────────┐
│  If R1' is not equal to R1, authentication failed and    │
│  server terminates the session.                          │
└─────────────────────────────────────────────────────────┘
                            ↓                      /— 140
┌─────────────────────────────────────────────────────────┐
│          Server generates random number KS1.             │
└─────────────────────────────────────────────────────────┘
                            ↓                      /— 145
┌─────────────────────────────────────────────────────────┐
│  Server uses AES encryption to encrypt (R2 || KS1) into  │
│  EKx1(R2 || KS1), and then sends it to Client.           │
└─────────────────────────────────────────────────────────┘
                            ↓                      /— 150
┌─────────────────────────────────────────────────────────┐
│  Client uses secret key KX1 to decrypt EKx1(R2 || KS1)   │
│  into (R2' || KS1').                                      │
└─────────────────────────────────────────────────────────┘
                            ↓                      /— 155
┌─────────────────────────────────────────────────────────┐
│  If R2' is not equal to R2, authentication failed and    │
│  client terminates the session.                          │
└─────────────────────────────────────────────────────────┘
```

Figure 1B

— 160

— 165

Server calculates the session key as **KS = KS1 ⊕ KS2'**.

— 170

Client calculates the session key as **KS' = KS1' ⊕ KS2**.
**KS'** should be identical to **KS**.

Figure 1C

200

205

Server encrypts audio/video data using the session key KS and 128 bit AES cipher.

210

Client decrypts the audio/video data using session key KS'.

Figure 2A

220

225

Determine *i*.

230

For each *i* value, if *i* = 1, server encrypts
the whole video frame using **KF1**.

235

If *i* > 1, server encrypts the whole video frame using **KFi**.

Figure 2B

240

245

Determine $i$.

250

For each $i$ value, if $i$ *(mod P)* = *1*, encrypt Mi using RC4.

255

If $i$ *(mod P)*≠ *1*, encrypt Mi as:

$$S(M_{\lfloor (i-1)/P \rfloor \times P+1}) \oplus M_i$$

Figure 2C

/— 300

/— 305

Client receives $ID_S$ from server.

/— 310

Client determines whether the $ID_S$ is in the blacklist.

/— 315

If the $ID_S$ is in the black list, client terminates the session.

/— 320

Server receives $ID_C$ from client.

/— 325

Server determines whether the $ID_C$ is in the blacklist.

/— 330

If the $ID_C$ is in the black list, server terminates the session.

Figure 3

**European Patent
Office**

# EUROPEAN SEARCH REPORT

Application Number

EP 06 01 7759

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENEZES, OORSCHOT, VANSTONE: "Handbook of Applied Cryptography" HANDBOOK OF APPLIED CRYPTOGRAPHY, CRC PRESS SERIES ON DISCRETE MATHEMATICS AND ITS APPLICATIONS, 1997, pages 497, 498, 530-531, 570, XP002412963 BOCA RATON, FL, US ISBN: 0-8493-8523-7 * page 497, paragraph 12.3.1 * * page 498, line 7 - line 20 * * page 530, line 22 - page 531, line 9 * * page 570, paragraph 13.38 *  ----- | 1-15 | INV. H04L9/08 H04L9/32 |

TECHNICAL FIELDS
SEARCHED (IPC)

H04L

The present search report has been drawn up for all claims

| Place of search | Date of completion of the search | Examiner |
|---|---|---|
| Berlin | 29 December 2006 | CARNERERO ALVARO, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)